# EUROPEAN PATENT APPLICATION

(11) **EP 1 142 478 A1**
(43) Date of publication of application: **10.10.2001**
(21) Application number: 00830263.0
(22) Date of filing: 06.04.2000
(51) Int. Cl.: A21C 11/04, A21C 11/08

(54) **A rotary cylinder for forming food products destined for oven baking**

(71) Applicant: Errebi Technology S.r.l., 45021 Badia Polesine (Rovigo) (IT)
(72) Inventor: Bortolini Sergio, I-45021 Badia Polesine(Rovigo) (IT)
(74) Representative: Gotra, Stefano

(57) **Abstract**

A rotary cylinder (3) for forming food products for oven baking has an external lateral surface which bears a plurality of moulds which reproduce a shape of the food products. A fresh food dough (5) exits from a hopper (6); an externally-geared supply roller (7) pushes the dough towards the external lateral surface of the forming cylinder (3); a doctor (8) scrapes away any excess of dough; a belt (10), pushed against the forming cylinder (3) by a counter-roller (9), extracts products formed by the forming cylinder (3) and sends them to an oven for baking. The surface of the cylinder moulds destined to contact the dough is made of a titanium-based material which favours a clean and immediate detachment of the dough, on which no trace of the material of which the cylinder is made is left.

## Description

Specifically, though not exclusively, the invention is usefully applied in the forming of both sweet and savoury biscuits, crackers, rusks etc., destined to be subsequently cooked in an oven.

In particular, reference is made to a rotary cylinder according to what is recited in the preamble of the first claim.

Cylinders of the above type are already used in a plant for the manufacture of food products. The plant operation involves taking an uncooked food dough and conveying it between a rotary cylinder and an opposing element cooperating with the cylinder for forming products. The impressions, either embossed or in relief on the rotary forming cylinder contact with the dough, which is shaped according to the shape of the impressions or the relief. The dough is then detached from the cylinder and the products formed are sent, via a conveyor line, to the oven.

One of the characteristics of rotary cylinders used in biscuit (or other ovenbaked product) forming is to obtain a clean, precise and immediate detachment of the dough from the rotary cylinder. For this reason, the surface of the rotary cylinder which will come into contact with the dough to be shaped must be made of a material which is able not only to make a precise shaping impression on the dough, but also to guarantee that the dough efficiently detaches from the surface after forming.

Known-type rotary cylinders for forming baked food products are susceptible to improvement with regard to their suitability for guaranteeing a clean uncooked dough detachment as well as a high level of precision as regards the shape of the product obtained.

A further important characteristic of these rotary cylinders is that they must guarantee that the process is hygienic and non-toxic, and in general they must be suitable for working with food products. It must be said, however, that rotary cylinders at present in use in dough-forming are made of materials, for example bronze and teflon, which have the drawback of leaving traces of the material in the food.

The main aim of the present invention is to obviate the above limitations and drawbacks in the prior art, by providing a rotary cylinder for forming dough mixtures destined to be cooked in an oven, with which cylinder a clean detachment of the dough can be encouraged.

An advantage of the invention is considerably to improve the precision of the shape of the oven-bakable dough products obtained.

A further advantage is that precise shaping is made possible, even where the shapes are relatively complex.

A further advantage is that the invention provides a cylinder with a long operational life.

A still further advantage is that the risk of polluting the products due to loss of particles or even toxic substances lost by the material the cylinder is made of is reduced to a minimum.

These aims and advantages are all achieved by the invention as it is characterised in the appended claims.

Further characteristics and advantages of the present invention will better emerge from the detailed description that follows, of some preferred but not exclusive embodiments thereof, illustrated purely by way of example in the accompanying figures of the drawings, in which:
figure 1 shows a first embodiment of a plant for forming oven-bakable food products, in which the forming is done by filling forming cells with a fresh food dough;
figure 2 shows a second embodiment of a plant for forming oven-bakable food products, in which the forming is done by pressing and cutting a fresh dough conveyed by a conveyor belt.

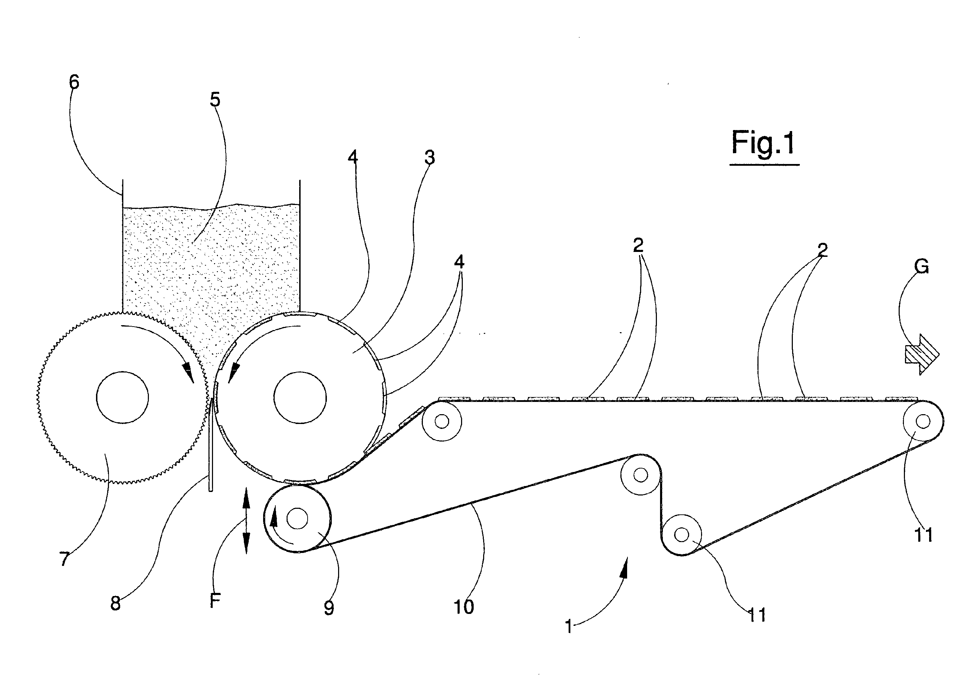

With reference to figure 1, number 1 denotes in its entirety a plant for continuous forming of uncooked food products 2 destined for oven baking.

The plant 1 comprises at least one rotary forming cylinder 3 which rotates on command about its own axis. The cylinder 3 has an external side surface which affords a plurality of moulds 4 which are in effect a negative of a desired final form of the uncooked food products 2. In the illustrated example the moulds 4 are recessed with respect to the external cylindrical surface of the cylinder 3. The moulds 4 are basically forming cells recessed in the cylinder 3.

The plant 1 comprises means for supplying a fresh food dough 5 to the forming cylinder 3. In the illustrated example the means for supplying comprise at least one loading hopper 6 inferiorly having at least one exit opening for the dough 5 and at least one supply roller 7 opposite to the forming cylinder 3 and counter-rotating about an axis which is parallel to the cylinder 3 axis. The supply roller 7 exhibits a geared external surface with the teeth of the gears being parallel to the rotation axis. The geared surface favours drawing of the food dough 5 which exits inferiorly of the hopper 6 in the direction of the opposite rotary cylinder 3. The means for supplying the dough also have the task of completely filling the hollow moulds 4 of the cylinder 3 with the uncookedfood dough. A doctor 8 operates contactingly with the forming cylinder 3 in order to remove the excess dough from the cylinder 3 and leave only the dough contained inside the moulds 4.

The plant 1 comprises means, operatively associated to the rotary cylinder 3 and arranged downstream of the doctor 8, for detaching the dough contained in the moulds 4 in the cylinder 3. In the illustrated example the means for detaching comprise a detachment roller 9 opposite to the cylinder 3 and rotating in an opposite direction thereto. The rotation axis of the detachment roller 9 is parallel to the axis of rotation of the cylinder 3. At least the external surface of the detachment roller 9 is made preferably of a deformable material, for example an elastomer. The distance between the detachment roller 9 axis and the forming cylinder 3 axis can be adjusted in the direction indicated by the arrows F. The detachment roller 9 presses with a predetermined force (adjustable by controlled variations of the distance between the roller 9 and the cylinder 3) against the forming cylinder 3, with an interpositioning of a detachment belt 10 at least partially wound about the roller 9. The belt 10 is preferably made of cotton or cotton mixed with a synthetic material. The belt 10 is ring-wound and runs on pulleys 11. The detachment belt 10 is made to pass between the detachment roller 9 and the forming cylinder 3 and maintains contact, at least for a short tract immediately downstream of the initial tangential point, with the external surface of the forming cylinder 3. The detachment belt 10 then moves away from the cylinder 3 external surface and distances therefrom, taking with it the formed products 2 which stay attached to the belt 10 and are extracted from the moulds 4 by effect of a greater adherence to the material of the belt 10. The food products 2 which are detached from the belt 10 are then sent on to the oven to be cooked, in the direction indicated by arrow G.

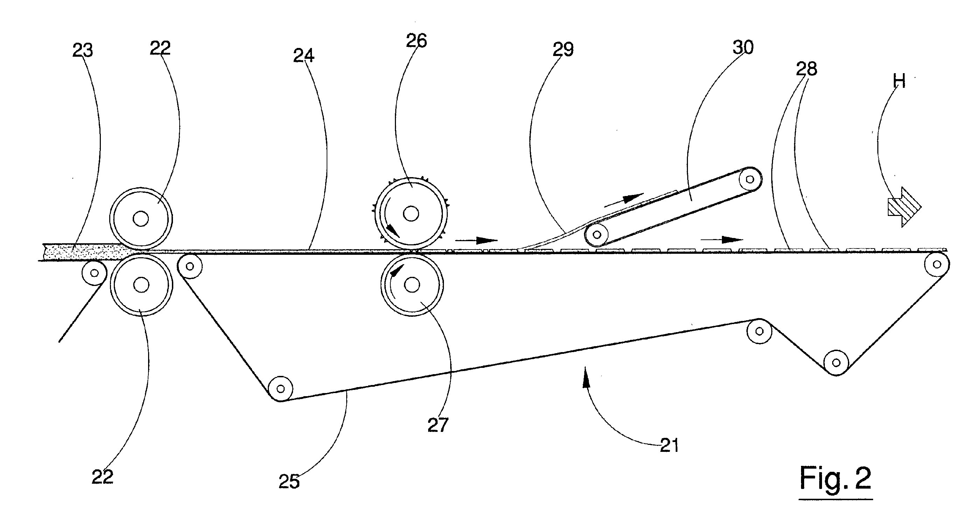

Figure 2 shows a forming plant 21 comprising at least a pair of rollers 22 between which the dough 23 is made to pass, so that it is rolled out into a continuous sheet 24 of dough. This sheet is then conveyed, on a conveyor belt, to at least one rotary cylinder 26 for forming food products for oven baking. The forming cylinder 26 is arranged above the advancing rolled-out dough. The cylinder 26 externally exhibits moulds destined to form food products.

A counter-roller 27, with an external surface preferably made of an elastomer, is counterposed and rotates in an opposite direction to the forming cylinder 26. The food dough is made to pass between the upper forming cylinder 26 and the counter-roller 27 below. During its passage the dough contacts with the moulds 4 on the forming cylinder 26. The moulds comprise a plurality of cutting elements in relief, each element being conformed in a closed ring with the same outline shape as a product under formation. The cutting elements are for cutting the dough, in continuous advance below the forming cylinder 26, into a plurality of single food products 28 which are separable from the rest of the dough. The forming cylinder 26 carries out a dough pressing and cutting operation. The rest of the cut-away but continuous dough is removed by a conveyor belt 30 and can be recycled, while the single products continue to advance on the conveyor belt 25 towards the oven, in the direction indicated by the arrow H.

The description that follows, relating to a generic rotary forming cylinder for food products for oven baking, can be referred to both forming cylinders 3 and 26 of figures 1 and 2.

According to the invention, in a forming cylinder for food products destined for oven baking, at least the surface bearing the moulds (and therefore destined to come into contact with the dough) is made of titanium or a material including titanium. This material can be commercially pure titanium (or more-or-less pure) or it can be a titanium alloy with a not insignificant titanium content, or it can be a titanium compound (e.g. titanium carbide or nitride). The alloy could be Ti-Al-V (for example Ti6A14V) or Ti-Al-Nb, or even Ti-Al-Ta, or other alloys of known type.

Experiments have shown that the use of titanium, or a compound thereof, or an alloy thereof, for the external surface of a forming cylinder destined for contact with a fresh food dough of the type destined to be oven-baked, considerably improves detachment or anti-adherent properties of the dough with respect to the cylinder. It has also been seen that contact between the fresh dough and titanium, or a titanium compound, or a titanium alloy or titanium compound alloy, guarantees a precise and accurate product moulding, even where the final forms required are relatively complex. Thanks to the use of a forming cylinder, with the invention forming plant productivity can be increased without any risk to the quality of the products obtained. A prerogative of the invention is to avoid the presence of traces of the forming cylinder in the bakable product.

In a preferred embodiment, the forming cylinder exhibits at least the moulds destined to contact the food dough, in the form of impressions which are surface-treated with a continuous layer of titanium nitride. The layer is preferably a slim (around a few micrometres) and uniform film on a metal substrate, which substrate can be, for example, bronze, cast iron, aluminium, steel, commercially pure titanium, a titanium alloy or a stellite alloy. The surface layer of titanium nitride is preferably made by absorption of the TiN by the metal substrate, with no significant increase in breadth of the substrate itself. Methods for application of a layer of TiN on a metal substrate are known and require no special explanation.

The surface layer of titanium nitride, made as described above, is continuously extended over the whole lateral external surface of the cylinder.

It has been observed that the use of titanium nitride further reduces, for example with respect to commercially pure titanium, the force needed to extract the fresh food dough from the moulding cell, with a consequently lower deformation of the product obtained. Furthermore, the use of titanium nitride, even more than pure titanium, reduces the risk of bacterial adhesion to the cylinder, thus preventing bacterial contamination of the product obtained. With respect to commercially pure titanium, the use of titanium nitride enables a forming cylinder to be obtained which is easy to clean and which stays clean for a longer time.

In a further embodiment, the forming cylinder comprises a central nucleus and an external lateral covering, which covering bears the impressed moulds and is made of titanium or a material comprising titanium. The central nucleus can be made, for example, of steel, bronze, aluminium, cast iron, but also of commercially pure titanium or Ti6A14V. Thus, a forming cylinder might be made entirely or almost entirely of titanium or of a material containing titanium.

The lateral external surface of the forming cylinder, bearing the mould impressions, can be made in the form of a plurality of coaxial rings, which can be interchangeable and are arranged axially side-by-side and supported on the central nucleus, on which the rings can slide axially during a mounting and dismounting stage.

In a further embodiment, the cylinder mould impressions can be arranged on pins which can then be applied, preferably removably, on the surface of the forming cylinder.

## Claims

1. A rotary cylinder (3), (26) for forming food products destined for oven baking, having a lateral external surface bearing a number of moulds, either in relief or impressed, which moulds are shaped such as to give rise to a desired final shape of the food products after moulding by contact of the moulds with a food dough conveyed to the lateral external surface of the cylinder,
**characterised in that** at least a surface of the moulds destined to contact with the dough is made of titanium or of a material comprising titanium.

2. The cylinder of claim 1, **characterised in that** at least the moulds destined to contact with the food dough are surface-treated with a layer of titanium nitride.

3. The cylinder of claim 1, **characterised in that** at least an external covering bearing the moulds is entirely made of titanium or of a material containing titanium.

4. The cylinder of claim 1, **characterised in that** at least the surface of the moulds destined to come into contact with the food dough is made of commercially-pure titanium or of a titanium-based alloy.

5. A plant for forming food products for oven baking, comprising:
at least one forming cylinder (3, 26), which rotates on command, having a lateral external surface which bears a plurality of moulds, either in relief or impressed, which moulds are shaped such as to give rise to a desired final shape of the food products after moulding;
means for supplying (6, 7) (22, 25) a food dough, destined for oven-baking, in which the dough is conveyed towards the forming cylinder and forms the products by effect of contact of the dough with the moulds on the forming cylinder;
means for supplying (10), (25) the formed products exiting from the forming cylinder, for conveying the products to an oven for baking;
**characterised in that** the forming cylinder is made according to any one of the preceding claims.

6. A use of titanium or of a material including titanium, for making at least a part of an external surface of a rotary cylinder (3) (26) for forming food products for ovens, which external surface is destined to come into contact with a food dough in order to form uncooked products which must be detached from the surface and subsequently sent on to an oven.
